# EUROPEAN PATENT SPECIFICATION

(11) **EP 2 131 674 B1**
(45) Date of publication and mention of the grant of the patent: **02.05.2012**
(21) Application number: 08723894.5
(22) Date of filing: 12.03.2008
(51) Int. Cl.: A61K 9/16, A23L 1/00, A23L 1/30

(54) **ALLERGEN-FREE, PROTEIN-FREE OR AT LEAST DAIRY FREE POWDERED NUTRITIONAL COMPOSITIONS AND THE USE THEREOF IN FOOD PRODUCTS**
ALLERGENFREIE, PROTEINFREIE ODER ZUMINDEST MILCHPRODUKTFREIE PULVERFÖRMIGE NÄHRMITTELZUSAMMENSETZUNGEN UND IHRE VERWENDUNG IN NAHRUNGSMITTELPRODUKTEN
COMPOSITIONS ALIMENTAIRES EN POUDRE EXEMPTES D'ALLERGÈNE, DE PROTÉINES OU AU MOINS DE LAIT, ET LEUR UTILISATION DANS DES PRODUITS ALIMENTAIRES

(30) Priority: 13.03.2007 EP 07104057
(43) Date of publication of application: 16.12.2009
(73) Proprietor: Friesland Brands B.V., 3818 LE Amersfoort (NL)
(72) Inventor: VAN SEEVENTER, Paul Bastiaan, NL-7943 SC Meppel (NL); STEENWELLE, Lucas Wilhelmus Johannes, NL-8012 VE Zwolle (NL)
(74) Representative: Hatzmann, Martin
(86) International application number: PCT/NL2008/050143
(87) International publication number: WO 2008/111837

(56) References cited:
- EP-A1- 0 550 067
- WO-A1-2005/084452
- WO-A1-2006/006856
- WO-A1-2006/081958
- WO-A2-2005/074699
- US-A- 4 963 385
- US-A- 6 129 906
- DRUSCH ET AL: "Physicochemical characterization and oxidative stability of fish oil encapsulated in an amorphous matrix containing trehalose" FOOD RESEARCH INTERNATIONAL, ELSEVIER APPLIED SCIENCE, BARKING, GB, vol. 39, no. 7, 1 August 2006 (2006-08-01) , pages 807-815, XP005456190 ISSN: 0963-9969
- DATABASE WPI Derwent Publications Ltd., London, GB; AN 1996-502977, XP002528836 -& JP 08 259944 A (NIPPON SUISAN KAISHA LTD) 08 October 1996

## Description

The present invention relates to encapsulated or powdered nutritional compositions, and especially to such compositions containing active ingredients. In particular the invention relates to such products encapsulated in a material that is allergen free or at least free from protein ingredients and especially free from dairy components. Allergen free formulations are particularly important for specific nutritional purposes such as consumer groups with diet limitations due to intolerance to certain allergens.

The need of encapsulation of ingredients which are either unstable or incompatible with the product environment or matrix is a demand for successful product innovations within the food industry. Other important issues for such products are related to the bioavailability and control of release of the active ingredient or to the prevention of undesired perception of the active (taste masking).

Novel functionalities of active ingredients in complex food matrices are of increasing importance for innovative product development. Examples of such active ingredients comprise flavours, vitamins, minerals, fatty acids, probiotics and various classes of bioactive components.

In addition, the present invention is particularly exemplified by the use of long chain poly unsaturated fatty acids (LCPUFAs) in powder form in food products, but other actives which may experience one or more of the sketched problems may also be incorporated in the matrix described in detail hereinbelow.

LCPUFAs have a number of unsaturations in their fatty chains. Such compounds are rather sensitive to oxygen and other chemicals that react with unsaturated bonds. The reacted products loose their favourable effects and may give rise to taste and smell problems. Moreover, the storage stability of LCPUFAs is rather restricted.

It is known that the encapsulation of LCPUFA oils can result in a more easy application of such oils in various food products. For instance the use of LCPUFAs (*e.g.* arachidonic acid (ARA) docosahexaenoic acid (DHA) gamma linolenic acid (GLA)) in infant formula products or, more in general, in various types of food applications, aimed to improve the nutritional value of such products, is nowadays common.

In, for instance, EP-A-1 586 371, it is proposed to use combinations of proteins with modified starch and in particular with starches modified with n-octenylsuccinyl anhydride (NOSA), to render the obtained encapsulate more stable. However, these encapsulates do not fulfil the demands for an acceptable stability or shelf life and for a dairy free label.

EP 1 237 423 teaches a powder matrix (ex oil) with 40-80% NOSA in combination with 10-30% low molecular weight components, such as mono-, di- and trisaccharides, and 10-30% maltodextrin.

Also WO 04/089113 relates to a coating matrix (ex oil) with 5-95% NOSA or other high molecular weight (HMW) film forming carbohydrate in combination with 5-30% low molecular weight components, such as mono-, di- and trisaccharides, and 0-30% maltodextrin.

Further, EP-A2-1 066 761 describes a formulation, which is dealing with storage stability. More in detail, EP-1 066 761 relates to compositions comprising fat soluble substances in a glassy carbohydrate matrix. The fat soluble substances may *e.g*. be vitamins, carotenoids and PUFA's. The glassy matrix is composed of maltose or maltose syrup, or a mixture of low molecular weight carbohydrates and high molecular weight carbohydrates. It makes use of emulsifiers, which still results in relatively less stable encapsulates. Another disadvantage of formulations using such emulsifiers is the fact that such emulsifiers as ingredients may not be accepted by local regulations for infant formula or follow-up formulas.

In WO 06/081958, modified starch or polysaccharide based matrices containing an LCPUFA loading which are said to contain less than <0.5% (w oil/w powder) free oil, based on 30% oil LCPUFA loading are described.

In addition, it has been proposed in WO 2006/006856 to use mannitol as predominant coating material for sensitive oils such as LCPUFAs, optionally together with allergen free materials such as soy proteins or modified starches such as nOSA starch or Hi-cap.

Examples of encapsulated LCPUFA ingredients, which are suitably designed for nutritional applications, are known, and specific measures to improve the stability of such encapsulates have been undertaken and are described in the prior art. An example of such an encapsulate with improved stability has been described by Augustin in J. Food Science (71) no 2, (2006), E25-E32 and in WO 01/74175. Another example is EP-A-0 648 076, wherein the use of caseinate is described for the production of well protected oil encapsulates.

To overcome the known difficulties with sensitive components such as oxidation sensitive oils, it has further been proposed in the prior art to encapsulate LCPUFAs, or LCPUFA containing compositions, using as the coating materials proteins and/or other components that may give allergic reactions. For example, milk protein may give rise to allergic reactions.

In an attempt to enhance the antioxidative properties matrices consisting of emulsifying agents such as modified starches in combination with mannitol and reducing carbohydrates, when used in powdered nutritional compositions containing sensitive components, it has now been discovered that in addition to the above components a combination of inorganic or organic metal chelators (or more particular inorganic chelators, or even more particular salts of di- or tri- or poly phosphates) and additional low molecular weight (LMW) emulsifier (or more particularly, mono- and diglycerides of fatty acids, or even more particularly, glycerol mono- and distearates, abbreviated as GMS) has an improved effect on the oxidative stability of powders. Particularly, an enhanced oxidative stability of LCPUFA powdered formulations has been found as will be shown in the working examples hereinbelow.

In accordance with a first aspect, the present invention relates to a spray-dried allergen-free or at least protein or dairy free composition comprising:
(i) from 10-80 wt.%, preferably from 20-60 wt.% of a sensitive component, such as an oxidation sensitive edible oil; in a matrix comprised of
(ii) mannitol;
(iii) reducing sugars and especially glucose syrup; typical amounts of reducing sugars, such as glucose syrup solids are in the range of 15-85%, more preferably in the range of 30-60%; the ratio mannitol being in the range of 2:1 to 1:40; preferably in the range of 1:1 to 1: 10; and most preferably in the range of 1:2 to 1:6 ;
(iv) emulsifying modified starches; typical amounts being in the range of 4-60%, more preferably in the range of 10-40%.
(v) a low molecular weight emulsifier, such as mono- and diglycerides of fatty acids, acetic acid esters of mono- and diglycerides of fatty acids, lactic acid esters of mono- and diglycerides of fatty acids, citric acid esters of mono- and diglycerides of fatty acids, tartaric esters of mono- and diglycerides of fatty acids, or mixed esters of mono- and diglycerides of fatty acids, sucrose esters of fatty acids, or sorbitan esters of fatty acids; typical amounts being in the range of 0.1-5%, more preferably in the range of 0.5-2%;
(vi) metal chelators such as salts of di- or tri- or poly phosphates, salts of citric acid, malic acid, calcium dinatrium ethylene diamine tetraacetic acid (EDTA), and (allergen-free or hypo-allergenic) protein hydrolysates or fractions high in phosphoric ester content; in the present invention particularly functional as metal chelators are the tri- and polyphosphates.

In a preferred embodiment, the composition according to the invention further comprises one or more antioxidants. Particularly, the composition may comprise at least one antioxidant in the matrix, preferably an ascorbate such as sodium ascorbate. Alternatively or in addition, the composition according to the invention may comprise at least one antioxidant in the oil, preferably being an antioxidant selected from the group consisting of lecithin, citric acid, tocopherol, rosemary extract, green tea extract, ascorbyl palmitate and mixtures thereof.

The presence of a free flowing aid, such as tricalcium phosphate or silicic acid, is additionally preferred.

In a preferred embodiment, the composition according to the invention is in free flowing form, said powder preferentially having a mean particle size of from 20-800, preferably 100-300 µm.

The most preferred embodiments comprise or contain as sensitve component an oxidation sensitive edible oil LCPUFA.

In a second aspect, the present invention relates to a process for preparing a composition as defined in the present description and appending claims, comprising forming an aqueous emulsion comprising the sensitive components, e.g. the edible oil, glucose syrup, mannitol, reducing sugars and especially the emulsifying starch, the low molecular weight emulsifiers and the metal chelator, and spray-drying said emulsion. In a specifically preferred embodiment, the spray drying is carried out using a Filtermat spray drying installation type spray dryer. Such spray dryers use nozzle atomization in a co-current tower that directs the semi-dried particles downward onto a moving belt. The material is then gently conveyed as a porous layer to zones of post-drying and cooling resulting in a crisp cake-like structure that breaks up at the end of the belt.

In a third aspect, the present invention is directed to the use of the composition according the invention in a food product.

Further advantages and embodiments of the present invention are elaborated herein-below.

The compositions of the invention are suitable for use in a food product. The compositions may be consumed themselves, but they are typically incorporated into a food product or a nutritional supplement before consumption.

The compositions according to the invention are preferably in the form of a free-flowing powder. The term "free-flowing powder", as used herein, is well known to those skilled in the art and includes particulate materials that can be poured (e.g., from one vessel having an opening of from about 10 cm² to 50 cm² to another vessel of similar dimensions) without substantial clumping of the particles. In detail, the term "free-flowing" is used for a powdered material that is not sticky, and thus has no or hardly any tendency to agglomerate or to adhere to contact surfaces. The so-called angle of repose, θ*ᵣ*, is sometimes used as a measure for the flow properties of powders. The angle of repose is the angle that a cone of powder forms between a flat surface when it is poured onto that surface. Typically, for a free-flowing powder θ*ᵣ* is low, *e.g*. smaller than 60° or smaller than 45°, such as 40° or less.

Such free-flowing powders are sometimes referred to as "dry powders", although the word "dry" in this context does not necessarily imply the absence of water from the composition. Typically, the powder has a mean particle size of from about 10 µm to about 1000 µm, preferably from about 50 µm to about 800 µm, more preferably from about 90 to 400 µm and most preferably from 100 µm to about 300 µm. Particle sizes can be determined using techniques known to the skilled man, e.g. by using the well-known Coulter Counter. For example, more than 95 % by weight of the particles may have a size of less than 800 µm and/or more than 85 % by weight of the particles may have a size of less than 500 µm and/or more than 90 % by weight of the particles may have a size of greater than 20 µm and/or 65 % by weight of the particles may have a size of greater than 200 µm. The powder form of the composition of the invention preferably has a bulk density of from 200 to 600 g/l, such as from 300 to 500 g/l.

The compositions of the invention preferably comprise the edible oil in an amount of from about 10% to about 80% by weight, more preferably from about 20% to about 60% by weight, even more preferably from about 25% to about 35% by weight. The edible oil comprises at least 10% by weight of one or more carboxylic acids containing at least 18 carbon atoms and at least 2 carbon-carbon double bonds, or an ester thereof. The edible oil may comprise the one or more carboxylic acids or esters thereof either as the sole component or as one component of a mixture. The amount of the one or more carboxylic acids or esters thereof in the edible oil is at least 10 % by weight of the edible oil, preferably at least 25 % by weight, more preferably at least 28 % by weight of the edible oil. Other components of the edible oil may include, for example, saturated carboxylic acids having from 12 to 30 carbon atoms, mono-unsaturated carboxylic acids having from 12 to 30 carbon atoms and mixtures thereof, typically as their esters, such as glyceride esters, e.g. triglycerides.

The edible oil is preferably capable of providing health benefits.

The one or more carboxylic acids comprise at least 18 carbon atoms and at least 2 carbon-carbon double bonds. Preferably, the one or more carboxylic acids comprise from 18 to 30 (for example, 18 to 24) carbon atoms and from 2 to 6 carbon-carbon double bonds. The one or more carboxylic acids may be single carboxylic acids or mixtures of two or more carboxylic acids. Each of the one or more carboxylic acids may be in the form of the free acid, an ester or mixtures of free acid and one or more esters. Typically, the one or more carboxylic acids will be in the form of a complex mixture as present in or derived from a natural source. Examples of suitable carboxylic acids are docosahexaenoic acid (DHA), eicosapentaenoic acid (EPA), conjugated linoleic acid (CLA) (including the cis-9, trans-11 and trans-10, cis-12 isomers and mixtures thereof), stearidonic acid, linoleic acid, alpha-linolenic acid (ALA), gamma-linolenic acid (GLA), arachidonic acid (ARA) and mixtures thereof. Preferably, the one or more carboxylic acids are selected from DHA, EPA and mixtures thereof. In a mixture of DHA and EPA, the components can be present at any ratio, but a weight ratio of DHA/EPA of 0.4 to 8.0 may be preferred for certain applications.

The one or more carboxylic acids may be in the form of free acids (including salts thereof, such as sodium salts), or in the form of esters. Suitable esters include esters of the carboxylic acids with aliphatic alcohols containing from one to six carbon atoms, such as ethyl esters. Other suitable esters include esters with alcohols and polyols that are acceptable in food products. Examples of other esters are mono-, di-, and tri- glycerides and mixtures thereof. Triglyceride esters are particularly preferred, typically as the major component (*i.e*., greater than 50% by weight) together with mono- and/or di- glycerides, for example up to 35% by weight diglycerides and up to 5% by weight monoglycerides.

The term "edible oil" covers oils that are non-toxic and can be consumed as part of a normal diet. The edible oil is typically a liquid at 25°C and atmospheric pressure and is preferably liquid within the temperature range of 0°C to 25°C at atmospheric pressure. The oil is generally hydrophobic (for example it is substantially immiscible with water at a 1:1 weight ratio at 25°C). The oil is preferably obtained or obtainable from a natural source, such as a vegetable oil, an animal oil (including fish oil) or animal fat, or a microbial oil, but may also be synthetic. The oil may be a mixture of oils from different sources or a mixture of a synthetic oil with one or more oils from natural sources.

It is particularly preferred that the edible oil is fish oil. The fish oil may be directly or indirectly obtainable from fish and may be, for example, a fish oil concentrate, a fractionated fish oil or a modified fish oil. Fish oils include oils from mackerel, trout, herring, tuna, salmon, cod, menhaden, bonito and sardines. Fish oil typically contains a mixture of omega-3 and omega-6 PUFA as their triglycerides, together with other components. In a particularly preferred embodiment, the oil is a fish oil concentrate comprising at least 30% by weight DHA. Alternatively, also oils obtainable from fungi and algae containing high amounts of LCPUFAs may be used.

The oil component of the composition preferably has a peroxide value of less than 10 meq/kg, preferably less than 9 meq/kg, more preferably less than 8 meq/kg, even more preferably less than 7 meq/kg, such as less than 6 or less than 5 meq/kg after storage in contact with air at 30 °C for 12 weeks up to 16 weeks.

Although in a preferred embodiment LCPUFA's are used as the sensitive component, also other active ingredients, which are sensitive to oxidation and/or are not storage stable, may be used. Examples of other sensitive ingredients comprise flavours, vitamins, minerals, fatty acids and unsaturated fatty acids in general carotenoids, probiotics and various classes of bioactive components.

In addition to the oil and emulsifying agents such as modified starches, the matrix is for the largest part composed of carbohydrates. Carbohydrates with a dextrose equivalent DE in the range of 30-50 are preferred. A typical amount of carbohydrates present in the matrix is in the range of 15-85%, more preferably in the range of 30-60%. The carbohydrates may comprise one or more reducing sugars that may be single reducing sugars or mixtures of two or more reducing sugars. Reducing sugars include mono- and di- saccharides such as glucose, fructose and maltose. Additionally, reducing sugars encompass trisaccharides and higher saccharides. Oligosaccharides having up to 50 (mono) saccharide moieties, more preferably having up to 45 saccharide moieties, such as 10-45 saccharide moieties, may also suitably be used. In preferred embodiments, glucose syrups are used, preferably those having 25-55 dextrose equivalents (DE).

Carbohydrates or more specifically, glucose syrups, can be described as a wide range of hydrolysates from starch, which further can be described in terms of their 'dextrose equivalent' (DE) value. DE is a measure of the total reducing power of all sugars present relative to glucose as 100 and expressed on a dry weight basis. A indirect method for determination of the DE of a starch hydrolysate is the determination of the saccharide composition of such a product by methods known in the art such as high performance liquid chromatography (HPLC). The DE value can be obtained by calculation from such a total saccharide composition.

Preferably, the one or more reducing sugars are derived from glucose syrup and, accordingly, are a mixture of reducing sugars. Glucose syrup is a starch hydrolysate containing reducing sugars, dextrin and water and typically contains not less than 20 % by weight of reducing sugars calculated as glucose. Very good results are obtained while using glucose syrup having a DE of 30-50.

As is already described in WO-A-06/006856, the ratio mannitol/reducing sugar is critical and should be within the indicated ranges

The composition of the invention is preferably dispersible in water having a temperature of about 15°C.

A specifically suitable surface active ingredient to be included as emulsifying starch, are modified starches, such as Hi cap^{®}. Such modified starches can, *e.g*., be modified by reaction with n-octenylsuccinyl anhydride (NOSA).

Suitable additional low molecular weight emulsifying agents, include for example, low molecular weight emulsifiers, such as specific esters mono- and diglycerides of fatty acids (such as acetic acid esters, lactic acid esters, citric acid esters, tartaric acid esters, or mixed forms of such esters), sucrose esters of fatty acids, or sorbitan esters of fatty acids and lecithin. Generally, LMW emulsifiers have a molecular weight of less than 1.5 kDa, and preferably less than 1 kDa.

As said, suitable metal chelating agents are salts of di- or tri- or polyphosphates, salts of citric acid, malic acid, calcium dinatrium ethylene diamine tetraacetic acid (EDTA), and allergen-free or hypo-allergenic protein hydrolysates or fractions high in phosphoric ester content (e.g. milk fractions rich in phosphate).

The compositions of the invention optionally comprise, in addition to the above components, and for as far as the required allergen free properties are maintained, one or more of an antioxidant, a flavouring agent, a free flowing agent and a colouring agent, which types of additives are well-known additives for the person skilled in the field of preparing spray-dried food-products and/or storage stable unsaturated oil products.

Suitable antioxidants include ascorbic acid and its salts (*e.g*., sodium salt), citric acid, rosemary or green tea extracts, tocopherols, ascorbyl palmitate, lecithin, and carotenoids. Free flowing agents, which are also termed anti-caking agents, include *e.g*. tricalcium phosphate. Other optional components include buffering agents such as salts of citrate and/or ortho phosphate.

The compositions of the invention can be produced by a method which comprises forming an aqueous mixture comprising edible oil, glucose syrup and drying the composition. More particularly, the oil and all other ingredients for the powder are emulsified to a dry matter content of generally 50 to 70 % (w/w), all other ingredients being dissolved or dispersed in water prior to addition of/in the oil. The best results are obtained when the emulsification is performed in such a way that an average oil droplet diameter of less than 1 micrometer (which droplet size can be determined using for instance a Malvern Mastersizer^{®}). Typically, pre-emulsification is performed at a temperature of 45-65°C by means of an Ultra Turrax^{®} at 6000 to 10.000 rpm. Subsequently, a two stage high pressure homogeniser can be used (150-250 bar/30-5- bar). Drying is preferably carried out by spray drying.

Conditions for spray drying are known to, or can be readily determined by, those skilled in the art. Spray drying is preferably carried out under conditions such that the resulting powder has a mean particle size of from 20 µm to 800 µm. Suitable results are obtained when the emulsion prepared is fed in a spray dryer by means of a high-pressure pump operating at a pressure of 50 to 200 bar, using a nozzle system for atomisation known to those skilled in the art. The spray dryer operates typically with an inlet temperature of 150-200°C, and an outlet temperature of 60-90°C.

More preferably, to effectively spray dry formulations according to the invention to obtain free flowable powders in good yield, specific spray dry installations are used. Therefore, most preferably, the use of Deck or Filtermat® spray dry installations are used to render the above formulations into free flowing powders with the described powder morphology. Such installations are in general terms similar and known for its mild and versatile drying capabilities. Such types of spray dryer installation can best be described as dryers composed of a section wherein in a first stage the powder is rendered semi-dry (<15% moisture) and dried to the desired final moisture content (typical <5%) in a second stage after the semi dry powder has been collected on a porous moving belt.

The mixture may be prepared by combining the above components, for example by mixing and optionally stirring to form an emulsion. The emulsion is then preferably spray dried to a water content of less than 5% by weight (preferably less than 4% by weight). The particulate material (*i.e*., powder) thus formed is then collected.

The composition is preferably packaged in the presence of an inert gas (*e.g*., nitrogen) and is advantageously stored at a temperature below room temperature, for example from about 5°C to about 10°C, prior to use.

The food products of the invention comprise from 0.01% to 20% by weight, preferably from 0.01% to 10% by weight, more preferably from 0.01% to 5% by weight, of a composition of the invention. The amount of the composition that is present in the food product will depend on the nature of the food product itself. For example, relatively high amounts of the composition may be tolerated in bakery products while smaller amounts are required in certain beverages. Suitable food products include, for example, bakery products (*e.g*., bread, biscuits or cookies, snack bars), oil-based products (*e.g*., spreads, salad dressings), dairy products (*e.g*., milk, reconstitutable milk products, yoghurt, ice cream), and non-dairy beverages (*e.g.*, fruit juice). Food products of the invention typically comprise up to 99% by weight water and up to 50% by weight of oils or fats other than the edible oil derived from the composition of the invention.

The use of the composition according to the invention has been found to increase the oxidative stability of the edible oil, as determined by off taste and/or odour. Additionally or alternatively, the stability of the edible oil may be determined by peroxide value and/or anisidine value.

The following non-limiting examples illustrate the invention and do not limit its scope in any way. In the examples and throughout this specification, all percentages, parts and ratios are by weight unless indicated otherwise.

### Examples

### Examples 1 to 5

The following formulations (Examples 1 to 5) were prepared (values in the table are parts by weight). Examples 1 to 4 are comparative examples. Example 5 is an example of a composition of the invention.

| | Example 1 | Example 2 | Example 3 | Example 4 | Example 5 |
|---|---|---|---|---|---|
| Marinol C38* | 34 | 34 | 34 | 34 | 34 |
| Mannitol | 8 | 8 | 8 | 8 | 8 |
| Glucose syrup | 34 | 33 | 34 | 33 | 32 |
| nOSA Starch | 21 | 21 | 21 | 21 | 21 |
| LMW emulsifier | | | | | |
| (GMS) | | 1 | 1 | 1 | 1 |
| Poly phoshpates | | | | | 1 |
| Na ascorbate | 3 | 3 | | 3 | 3 |
| Ascorbic acid | | | 2.7 | | |
| Ascorbyl palmitate | | | | 0.1 | |
| Cystein | | | | 0.2 | |
| Natural antioxidant | 0.1 | 0.1 | 0.1 | 0.1 | 0.1 |

| | | | | | |
|---|---|---|---|---|---|
| *Marinol C38 is a commercial fish oil (ex Lipid Nutrition, Wormerveer, NL) containing about 40% by weight EPA and DHA based on total amount of fatty acids. | | | | | |

Examples 1 to 5 were prepared by spray drying a mixture comprising the various components. More specifically, Examples 1 to 5 were prepared by emulsification of the oils together with all ingredients at a dry matter content of 50% w/w. Thereto, the ingredients other than oil were dissolved or dispersed prior to the addition of the oil. Pre-emulsification was performed at a temperature of 45°C to 65°C by means of an Ultra Turrax at 6,000 to 10,000 rpm. Subsequently, a two stage high pressure homogeniser was used with 200 bar for the first stage and 50 bar for the second stage of homogenisation. The emulsions thus obtained were then fed in to a spray dryer by means of a high-pressure pump operating at a pressure of 150 bar. The spray dryer was operated at an inlet temperature of 180°C and an outlet temperature of 75°C. The obtained powders were analysed for moisture content: values ranging from 0.5% to 2.5% were found. The powders were free-flowing.

The compositions of Examples 1 to 5 were stored under air at 40 °C for up to 10 weeks. The stability of the compositions before, during and after storage was assessed. Sensory evaluation was carried out by a team of panellists by tasting the powder when reconstituted in milk and in juice. In the sensory tests, a higher number indicates less smell and taste and therefore a better product.

| **Sensory evaluation I** | Storage powder: 40°C, under air | | | | |
|---|---|---|---|---|---|
| | Evaluation: taste of powder in milk | | | | |
| Weeks | Example 1 | Example 2 | Example 3 | Example 4 | Example 5 |
| 1 | 3.5 | 3.5 | 2 | 4 | 4 |
| 2 | 3 | 3.25 | 2 | 4 | 3.75 |
| 3 | 2.5 | 3.25 | | 2.75 | 3.5 |
| 4 | 2.5 | 2.75 | | | 3.5 |
| 6 | 2.25 | 2.5 | | | 3.5 |
| 8 | | | | | 2.5 |
| 10 | | | | | 2.75 |

| **Sensory evaluation II** | Storage powder: 40°C, under air | | | | |
|---|---|---|---|---|---|
| | Evaluation: taste of powder in juice | | | | |
| Weeks | Example 1 | Example 2 | Example 3 | Example 4 | Example 5 |
| 1 | 2 | 3.5 | 2 | 4 | 4 |
| 2 | 2.5 | 3 | | 2.5 | 3.75 |
| 3 | 3 | 3 | | 2 | 3.5 |
| 4 | 2 | 2.5 | | | 3 |
| 6 | 1.5 | 2.25 | | | 3 |
| 8 | | | | | 3 |
| 10 | | | | | 3 |

In sensory evaluations I and II, compositions were scored from 5 (neutral: best) to 1 (off-flavour: worst).

The results show that the composition according to the invention (Example 5) containing, besides mannitol, glucose syrup and emulsifying starch, a metal scavenger (Sodium poly phosphate), Sodium ascorbate and the low molecular weight emulsifier glycerol mono- and diglycerides of fatty acids (GMS), showed superior performance compared to the other compositions missing one of these components.

When the composition according to the invention (Example 5) is compared with the same composition without a metal scavenger (Example 2) the positive influence of a metal scavenger is illustrated.

Comparing Example 1 (without a low molecular weight emulsifier) with Example 2 containing GMS shows that GMS has a beneficial influence on the stability of the powder.

Examples 2, 3 and 4 have different anti-oxidant compositions. The composition with sodium ascorbate performs best.

### Examples 6 to 8

The following formulations (Examples 6 to 8) were prepared (values in the table are parts by weight). The examples show the influence of the presence of an anti-oxidative agent and the influence of oil load.

| | Example 6 | Example 7 | Example 8 |
|---|---|---|---|
| Marinol D40* | 35 | 35 | 50 |
| Mannitol | 8 | 8 | 10 |
| Glucose syrup | 34 | 36 | 8 |
| nOSA Starch | 21 | 21 | 30 |
| Na ascorbate | 2 | 0 | 2 |
| Natural antioxidant | 0.1 | 0.1 | 0.1 |

| | | | |
|---|---|---|---|
| *Marinol D40 is a commercial fish oil concentrate containing about 40% DHA and 6% EPA and DHA, by weight based on total fatty acids. | | | |

Examples 6 to 8 were processed in the same way as Examples 1 to 5.

The powders of Examples 6 to 8 were stored under air at 40 °C for up to 11 weeks. The stability of the compositions before, during and after storage was assessed. Sensory evaluation was carried out by a team of panellists by tasting the powder when reconstituted in milk and in juice. In the sensory tests, a higher number indicates less smell and taste and therefore a better product.

| **Sensory evaluation I** | Storage powder: 40°C, under air | | |
|---|---|---|---|
| | Evaluation: taste of powder in milk | | |
| Weeks | Example 6 | Example 7 | Example 8 |
| 0 | 4 | 3.5 | 4 |
| 3 | 3.5 | 1 | 3.25 |
| 4 | 3.5 | 1 | 3 |
| 5 | 3.5 | 1 | 3 |
| 6 | 3.5 | 1 | 2.75 |
| 7 | 3.5 | 1 | 2.75 |
| 8 | 3 | 1 | 1.5 |
| 11 | 2.5 | 1 | 1 |

| **Sensory evaluation II** | Storage powder: 40°C, under air | | |
|---|---|---|---|
| | Evaluation: taste of powder in juice | | |
| Weeks | Example 6 | Example 7 | Example 8 |
| 0 | 4 | 3.5 | 4 |
| 3 | 3.75 | 1 | 3.25 |
| 4 | 4 | 1 | 2.75 |
| 5 | 3.5 | 1 | 2.75 |
| 6 | 3.5 | 1 | 2.75 |
| 7 | 3.5 | 1 | 2.75 |
| 8 | 3 | 1 | 2 |
| 11 | 2.75 | 1 | 1.5 |

The results show that adding an anti-oxidant (sodium ascorbate) (Example 6 compared to Example 7) improves oxidation stability. The composition containing a lower amount of oil (Example 6) performed better than the composition containing a higher amount of oil (Example 8).

## Claims

1. Spray-dried allergen-free, or at least protein- or dairy-free composition, comprising:
(i) from 10-80 wt.% of a sensitive component; in a matrix comprised of
(ii) mannitol;
(iii) reducing sugars, preferably glucose syrup;
the weight ratio of mannitol/reducing sugars being in the range of 2:1 to 1:40;
(iv) emulsifying starch;
(v) low molecular weight emulsifiers; and
(vi) a metal chelator.

2. The composition according to claim 1, comprising at least one antioxidant in the matrix, and preferably comprising an ascorbate in the matrix.

3. The composition according to claim 1 or 2, wherein the sensitive component is an oil, comprising at least one antioxidant in the oil, and preferably comprising an antioxidant selected from the group consisting of lecithin, tocopherol, ascorbyl palmitate and mixtures thereof.

4. The composition according to any one of the preceding claims, comprising a free flowing aid, and preferably comprising tricalcium phosphate.

5. The composition according to any one of the preceding claims, in free flowing form.

6. The composition according to claim 5, wherein the powder has a mean particle size of from 20-800, preferably 100-300 µm.

7. The composition according to any one of the preceding claims, wherein the sensitive component comprises or is LCPUFA.

8. Use of the composition according to any one of the claims 1-7 in a food product.

9. The use of claim 8 in an edible oil containing food composition to increase the oxidative stability of said edible oil.

10. A process for preparing a composition as defined in any one of claims 1-7, comprising forming an aqueous emulsion comprising the ingredients as defined in said claims, and spray-drying said emulsion.

11. The process of claim 10, wherein the spray-drying is carried out using nozzle atomization in a co-current tower that directs the semi-dried particles downward onto a moving belt, said particles subsequently being conveyed as a porous layer to zones of post-drying and cooling.

12. The process of claim 10, wherein the emulsion is fed in a spray dryer by means of a high pressure pump operating at a pressure of 50 to 200 bar, using a nozzle system for atomisation.

13. The process of claims 10 or 12, wherein the spray dryer operates with an inlet temperature of 150-200°C, and an outlet temperature of 60-90°C.

## Patentansprüche

1. Sprühgetrocknete allergenfreie oder zumindest protein- oder milchproduktfreie Zusammensetzung, enthaltend:
(i) 10 bis 80 Gew.-% einer empfindlichen Komponente in einer Matrix umfassen
(ii) Mannitol;
(iii) reduzierende Zucker, vorzugsweise Glukosesirup; worin das Gewichtsverhältnis Mannitol/reduzierende Zucker zwischen 2 : 1 bis 1 : 40 beträgt:
(iv) emulgierende Stärke:
(v) niedermolekulare Emulgatoren; und
(vi) einen Metallchelatbildner.

2. Zusammensetzung gemäß Anspruch 1, enthaltend mindestens ein Antioxidationsmittel in der Matrix, und vorzugsweise enthaltend ein Ascorbat in der Matrix.

3. Zusammensetzung gemäß Anspruch 1 oder 2, worin die empfindliche Komponente ein Öl ist, enthaltend mindestens sein Antioxidationsmittel in dem Öl, und vorzugsweise enthaltend ein Antioxidationsmittel ausgewählt aus der Gruppe bestehend aus Lecithin, Tocopherol. Ascorbylpalmitat und Mischungen davon.

4. Zusammensetzung gemäß einem der vorhergehenden Ansprüche, enthaltend eine fließfähige Säure, und vorzugsweise enthaltend Trikalziumphosphat,

5. Zusammensetzung gemäß einem der Ansprüche in fließfähiger Form.

6. Zusammensetzung gemäß Anspruch 5, worin das Pulver eine mittlere Partikelgröße von 20 bis 800, vorzugsweise 100 bis 300 µm aufweist.

7. Zusammensetzung gemäß einem der vorhergehender Ansprüche, worin die sensible Komponente LCPUFA enthält oder ist.

8. Verwerdung zusammensetzung gemäß einen der Ansprüche 1 bis 7 in einem Nahrungsmittelprodukt.

9. Verwendung gemäß Anspruch 8 in einer essbares Öl enthaltenden Nahrungsmittel-Zusammensetzung, zur Erhöhung der oxidativen Stabilität des essbaren Öls.

10. Verfahren zur Herstellung einer Zusammensetzung wie in einem der Ansprüche 1 bis 7 definiert, umfassend die Bildung einer wässrigen Emulsion, enthaltend die Inhaltsstoffe wie in den genannten Ansprüchen definiert, und Sprühtrocknung dieser Emulsion.

11. Verfahren gemäß Anspruch 10, worin die Sprühtrocknung durchgeführt wird hunter Verwendung von Düsenzerstäubung in einem Gleichstrom-Turm, welcher die halbgetrockneten Partikel abwärts auf ein laufendes Band leitet, wobei die Partikel anschließend als eine poröse Schicht Zonen der Nachtrocknung und Abkühlung zugeführt werden.

12. Vorfahren gemäß Anspruch 10, worin die Emulsion mittels Hochdruckpumpen, die bei einem Druck von 50 bis 200 bar arbeiten, einem Sprühtrockner zugeführt wird, unter Verwendung eines Düsensystems zur Zerstäubung.

13. verfahren gemäß den Ansprüche 10 oder 12, worin der Sprühtrockner mit einer Eintrittstemperatur von 150 bis 200°C und einer Auslasstemperatur vom 60 bis 90°C arbeitet,

## Revendications

1. Composition séchée par atomisation dépourvue d'allergène, ou au moins de protéines ou de produits laitiers comprenant :
(i) de 10 % à 80 % en poids d'un composant sensible ; dans une matrice composée de
(ii) mannitol ;
(iii) sucres réducteurs, de préférence du sirop de glucose ;
le rapport en poids de mannitol/sucres réducteurs étant compris dans le domaine de 2 : 1 à 1 : 40 ;
(iv) l'amidon d'émulsification ;
(v) émulsifiants de faible masse moléculaire ; et
(vi) un chélateur métallique.

2. Composition selon la revendication 1, comprenant au moins un antioxydant dans la matrice, et comprenant de préférence un ascorbate dans la matrice.

3. Composition selon la revendication 1 ou 2, dans laquelle le composant sensible est une huile, comprenant au moins un antioxydant dans l'huile, et comprenant de préférence un antioxydant choisi parmi le groupe consistant en lécithine, tocophérol, palmitate d'ascorbyle et des mélanges de ces derniers.

4. Composition selon l'une quelconque des revendications précédentes, comprenant un agent fluidisant, et comprenant de préférence du phosphate tricalcique.

5. Composition selon l'une quelconque des revendications précédentes, sous une forme à haute fluidité.

6. Composition selon la revendication 5, dans laquelle la poudre présente une taille de particules moyenne de 20 à 800, de préférence de 100 à 300 µm.

7. Composition selon l'une quelconque des revendications précédentes, dans laquelle le composant sensible comprend ou est un acide gras polyinsaturé à longue chaîne (AGPI-LC).

8. Utilisation de la composition selon l'une quelconque des revendications 1 à 7 dans un produit alimentaire.

9. Utilisation selon la revendication 8 dans une composition alimentaire contenant une huile comestible afin d'augmenter la stabilité à l'oxydation de ladite huile comestible.

10. Procédé de préparation d'une composition telle que définie dans l'une quelconque des revendications 1 à 7, comprenant la formation d'une émulsion aqueuse comprenant les ingrédients tels que définis dans lesdites revendications, et le séchage par atomisation de ladite émulsion.

11. Procédé selon la revendication 10, dans lequel le séchage par atomisation est réalisé à l'aide d'une atomisation par buse dans une tour à co-courant qui dirige les particules semi-séchées vers le bas sur une courroie mobile, lesdites particules étant ensuite transportées sous forme d'une couche poreuse vers des zones de post-séchage et de refroidissement.

12. Procédé selon la revendication 10, dans lequel l'émulsion est introduite dans un sécheur par atomisation au moyen d'une pompe à haute pression fonctionnant à une pression de 50 à 200 bars, en utilisant un système de buse d'atomisation.

13. Procédé selon la revendication 10 ou 12, dans lequel le sécheur par atomisation fonctionne avec une température d'entrée de 150 à 200°C, et une température de sortie de 60 à 90°C.
